# EUROPEAN PATENT SPECIFICATION

(11) **EP 2 284 706 B1**
(45) Date of publication and mention of the grant of the patent: **29.02.2012**
(21) Application number: 10157690.8
(22) Date of filing: 25.03.2010
(51) Int. Cl.: G06F 11/14, G06F 9/445, G06F 1/30

(54) **Electronic apparatus and method of controlling the same**
Elektronische Vorrichtung und Steuerungsverfahren dafür
Appareil électronique et son procédé de contrôle

(30) Priority: 12.08.2009 KR 20090074230
(43) Date of publication of application: 16.02.2011
(73) Proprietor: Samsung Electronics Co., Ltd., Suwon-si, Gyeonggi-do 442-742 (KR)
(72) Inventor: Jeon, Nam-jae, Gyeonggi-do (KR); Lee, Seung-hoon, Incheon (KR)
(74) Representative: Robinson, Ian Michael

(56) References cited:
- EP-A2- 1 956 489
- JP-A- 2004 005 305
- JP-A- 2007 010 357
- US-A1- 2004 123 057
- US-A1- 2004 230 851

## Description

### BACKGROUND

### 1. Field

Apparatuses and methods consistent with the exemplary embodiments relate to an electronic apparatus and a method of controlling the same, and more particularly to avoiding a memory leak generated when using a suspend to random access memory (RAM) (STR) mode.

### 2. Description of the Related Art

US2004/230,851 is one example of a portable electronic device with a "sleep mode" where power is maintained to a volatile memory. The claims have been characterised based on this document. Generally, a normal booting mode used in an operating system (OS) such as Windows, Linux, etc. takes a relatively long time. To solve this problem, various methods have been proposed. One among them is a suspend to RAM (STR) mode.

In the STR mode, work contents that are running just before an electronic apparatus is turned off, i.e., a suspend image, are stored in a RAM at the same time when the electronic apparatus is turned off, and the suspend image stored in the RAM is preserved by still supplying power to the RAM even though the electronic apparatus is turned off. Afterward, when a user turns on the electronic apparatus, the electronic apparatus is booted up by loading (i.e., resuming) the stored suspend image from the RAM instead of normal booting based on a hard disk drive (HDD) or a flash memory, thereby shortening a booting time.

However, the STR mode has a problem as follows.

In the case of a cold booting mode, a memory leak disappears when an application is performed and then the electronic apparatus is turned off. Here, the memory leak is a phenomenon in which a computer program continuously reserves memory unnecessarily. The memory leak occurs when allocated memory cannot be released after use. As the memory leaks are accumulated, the memory becomes wasted.

On the other hand, in the STR mode, a memory leak that occurs while executing an application is accumulated without disappearing even though the electronic apparatus is repetitively turned off and on. As the electronic apparatus is repetitively turned off and on with memory leakage caused by implementation of an application, the accumulated memory leaks may result in a lack of available memory when the electronic apparatus is turned on.

Thus, the STR mode has an effect on shortening the booting time, but wastes memory due to the memory leak.

### SUMMARY

According to the present invention there is provided an apparatus and method as set forth in the appended claims. Other features of the invention will be apparent from the dependent claims, and the description which follows. One or more exemplary embodiments provide an electronic apparatus and a method of controlling the same, which may effectively avoid an error due to a memory leak that may occur in a STR mode.

The foregoing and/or other aspects may be achieved by providing an electronic apparatus including: a nonvolatile memory unit in which an application is stored; a volatile memory unit in which data based on execution of the application is stored a controller which controls power supply to the volatile memory unit; characterized in that: the controller stops supplying power to the volatile memory unit when the electronic apparatus is turned off if a remaining capacity of the volatile memory units equals a threshold value for initializing the volatile memory unit, and keeps the power supplied to the volatile memory unit to make the volatile memory unit retain the data based on the execution of the application even when the electronic apparatus is turned off if the remaining capacity of the volatile memory unit does not equal the threshold value.

The controller may determine whether to initialize the volatile memory unit if a remaining capacity of the volatile memory unit reaches the threshold value.

The controller may determine whether to initialize the volatile memory unit in consideration of the amount of data temporarily stored for caching.

The controller may determine that the volatile memory unit needs to be initialized if there is no data temporarily stored for the caching.

The threshold value may be set to be larger than a minimum remaining capacity of the volatile memory unit where no more data can be stored.

The controller may initialize the volatile memory unit by resupplying power to the volatile memory unit being supplied with no power, or initialize the volatile memory unit when the electronic apparatus is turned on.

The controller may keep the power supplied to the volatile memory unit even when the electronic apparatus is turned off, until the initialized volatile memory unit reaches the threshold value.

The data based on the execution of the application may include work contents associated with the application that has been running in the electronic apparatus.

The threshold value may be dynamically set in response to a remaining capacity of the volatile memory unit or be set by a user.

According to another exemplary embodiment, there is provided a method of controlling an electronic apparatus, the method including: loading an application stored in a nonvolatile memory unit into a volatile memory unit; controlling power supply to said volatile memory unit; characterized by stopping supplying power to the volatile memory unit when the electronic apparatus is turned off if a remaining capacity of the volatile memory unit equals a threshold value for initializing the volatile memory unit; and keeping the power supplied to the volatile memory unit to make the volatile memory unit retain the data based on the execution of the application even when the electronic apparatus is turned off if the remaining capacity of the volatile memory unit does not equal the threshold value.

The method may further include determining whether to initialize the volatile memory unit if a remaining capacity of the volatile memory unit reaches the threshold value.

The method may further include determining whether to initialize the volatile memory unit in consideration of the amount of data temporarily stored for caching.

The method may further include determining that the volatile memory unit needs to be initialized if there is no data temporarily stored for the caching.

The threshold value may be set to be larger than a minimum remaining capacity of the volatile memory unit where no more data can be stored.

The method may further include initializing the volatile memory unit by resupplying power to the volatile memory unit being supplied with no power, or initializing the volatile memory unit when the electronic apparatus is turned on.

The method may further include keeping the power supplied to the volatile memory unit even when the electronic apparatus is turned off, until the initialized volatile memory unit reaches the threshold value.

The data based on the execution of the application may include work contents associated with the application that has been running in the electronic apparatus.

The threshold value may be dynamically set in response to a remaining capacity of the volatile memory unit or be set by a user.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a block diagram of an electronic apparatus according to an exemplary embodiment;

FIG. 2 is a view for explaining a general memory management method;

FIG. 3 is a view for explaining a memory management method according to an exemplary embodiment;

FIG. 4 is a view for explaining a memory management method according to another exemplary embodiment;

FIG. 5 is a flowchart of determining whether to initialize a volatile memory part according to an exemplary embodiment;

FIG. 6 is a flowchart of initializing the volatile memory part according to an exemplary embodiment;

FIG. 7 is a flowchart of initializing the volatile memory part according to another exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The claims may be embodied in various forms without being limited to the embodiments set forth herein. Descriptions of well-known parts are omitted for clarity, and like reference numerals refer to like elements throughout.

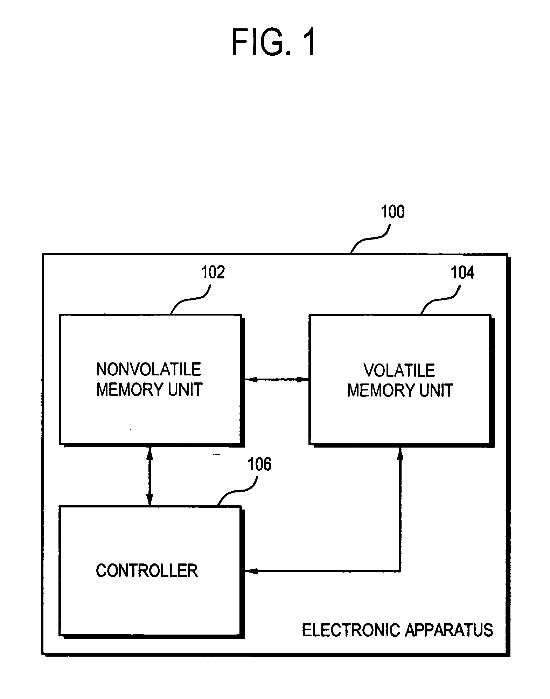

FIG. 1 is a block diagram of an electronic apparatus according to an exemplary embodiment.

In this exemplary embodiment, an electronic apparatus 100 may include a television (TV), a personal computer (PC), a mobile terminal, a digital versatile disc (DVD) device, a personal digital assistant (PDA), etc. Any electronic apparatus can be employed as the electronic apparatus 100 in this exemplary embodiment as long as it can be booted up in a suspend to RAM (STR) mode.

The electronic apparatus 100 in this exemplary embodiment may include a nonvolatile memory unit 102, a volatile memory unit 104, and a controller 106.

The nonvolatile memory unit 102 may be achieved by a read only memory (ROM), a flash memory, a hard disk drive (HDD), etc. The nonvolatile memory unit 102 retains stored data even when power is not provided to the nonvolatile memory unit 102.

The nonvolatile memory unit 102 may store an application. According to an exemplary embodiment, the application may be a program associated with an operating system (OS). Typically, the application stored in the nonvolatile memory unit 102 can be loaded into the volatile memory unit 104 and executed.

The volatile memory unit 104 may be achieved by a static random access memory (SRAM), a dynamic random access memory (DRAM), etc. Generally, volatile memory loses all stored data when not powered. However, according to this exemplary embodiment, the electronic apparatus 100 does not stop supplying power to the volatile memory unit 104 even when the electronic apparatus 100 is turned off. Therefore, the data stored in the volatile memory unit 104 can be retained even when the electronic apparatus 100 is turned off.

The volatile memory unit 104 may store data associated with execution of an application. According to an exemplary embodiment, the data based on the execution of an application may include work contents associated with an application that has been running in the electronic apparatus 100. Specifically, the data associated with the execution of an application may be a program related to the OS read out from the nonvolatile memory unit 102 while the electronic apparatus 100 is booted up. Also, in the case of the STR mode, the data may be a suspend image as work contents that have been running just before the electronic apparatus 100 is turned off.

If determining not to reach a threshold value at which the volatile memory unit 104 is initialized, the controller 106 keeps power supplied to the volatile memory unit 104 even when the electronic apparatus 100 is not powered, and thus causes the volatile memory unit 104 to retain the data based on the execution of the application. According to an exemplary embodiment, the controller 106 may operate under the STR mode. Specifically, the controller 106 stores the work contents, which are running just before the electronic apparatus 100 is turned off, as the suspend image in the RAM, i.e., in the volatile memory unit 104, and continuously supplies power to the volatile memory unit 104 even through the electronic apparatus 100 is turned off, thereby preserving the suspend image stored in the volatile memory unit 104. Afterward, when a user turns on the electronic apparatus 100, the controller 106 loads the suspend image stored in the volatile memory unit 104 instead of loading a program stored in the nonvolatile memory unit 102 into the volatile memory unit 104, thereby booting up the electronic apparatus 100. In this case, it is possible to omit an operation of loading a program associated with the OS into the volatile memory unit 104 during the booting, thereby shortening a booting time.

On the other hand, if determining to reach the threshold value at which the volatile memory unit 104 is initialized, the controller 106 stops supplying the power to the volatile memory unit 104 when the electronic apparatus is turned off. In this case, the data stored in the volatile memory unit 104 is deleted.

When a remaining capacity of the volatile memory unit 104 reaches the threshold value, the controller 106 may determine whether to initialize the volatile memory unit 104. According to an exemplary embodiment, the controller 106 may determine whether to initialize the volatile memory unit 104 based on the amount of data temporarily stored for caching. For instance, the controller 106 may determine to initialize the volatile memory unit 104 if there is no data temporarily stored for caching. In other words, whether to initialize the volatile memory unit 104 is determined based on a capacity to be released as an available area among areas of the volatile memory unit 104 allocated for the execution of the application. In this case, the data temporarily stored for caching may include at least one of a page cache, a buffer cache and a memory pool.

If it is determined to initialize the volatile memory unit 104, the controller 106 may initialize the volatile memory unit 104 at a time when the electronic apparatus 100 is turned off. To this end, when the electronic apparatus 100 is turned off, the controller 106 may resupply power to the volatile memory unit 104 and then initialize the volatile memory unit 104. That is, the controller 106 may operate as if the electronic apparatus 100 internally performs a cold booting mode. In this case, the electronic apparatus 100 externally appears to be turned off. For example, a panel of the electronic apparatus is turned off. Accordingly, a user recognizes that the electronic apparatus 100 is turned off.

Alternatively, the controller 106 may initialize the volatile memory unit 104 at a time when the electronic apparatus 100 is turned on.

In the case that the volatile memory unit 104 is initialized, until the initialized volatile memory unit 104 reaches the threshold value, the controller 106 may keep power supplied to the volatile memory unit 104 even though the electronic apparatus 100 is turned off. According to an exemplary embodiment, the controller 106 may keep the initialized volatile memory unit 104 in the STR mode.

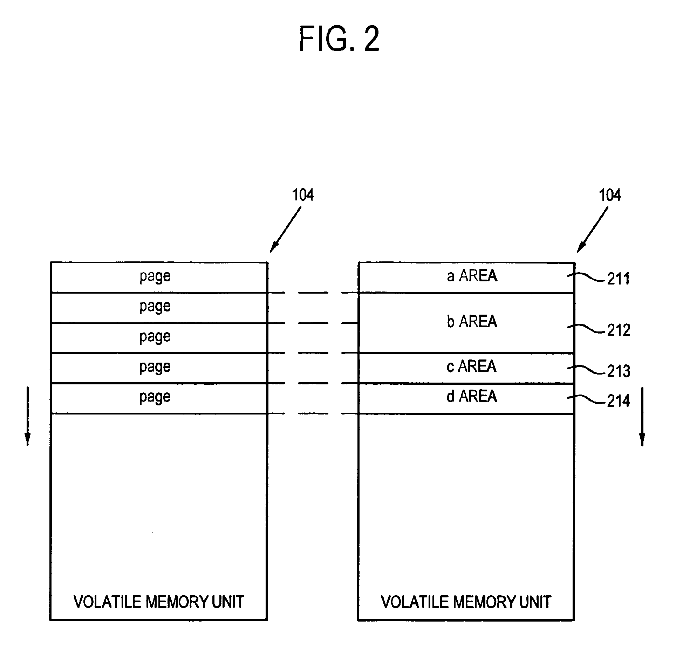

FIG. 2 is a view for explaining a general memory management method.

The electronic apparatus 100 may use a paging method or a segment method to manage a memory area. The paging method divides and allocates a virtual memory area into pages each having a uniform size. On the other hand, the segment method divides and allocates the virtual memory area into areas each having variable size.

FIG. 2 shows that the volatile memory unit 104 is allocated by the paging method. As shown in a left side of FIG. 2, the electronic apparatus 100 divides an area of the volatile memory unit 104 by a page unit corresponding to a certain size, and sequentially allocates the divided areas for executing applications. For example, the page unit may have a size of 4Kb.

If a certain application is requested, the electronic apparatus 100 allocates some areas of the volatile memory unit 104 for executing the corresponding application. If four areas, i.e., an a area 211, a b area 212, a c area 213, and a d area 214 are allocated for executing the corresponding application, one page is allocated to the a area 211, two pages are allocated to the b area 212, one page is allocated to the c area 213, and one page is allocated to the d area 214 (refer to a right side of FIG. 2).

If the allocated areas are not used any longer, the electronic apparatus 100 releases the allocated areas so that the released areas can be used again later.

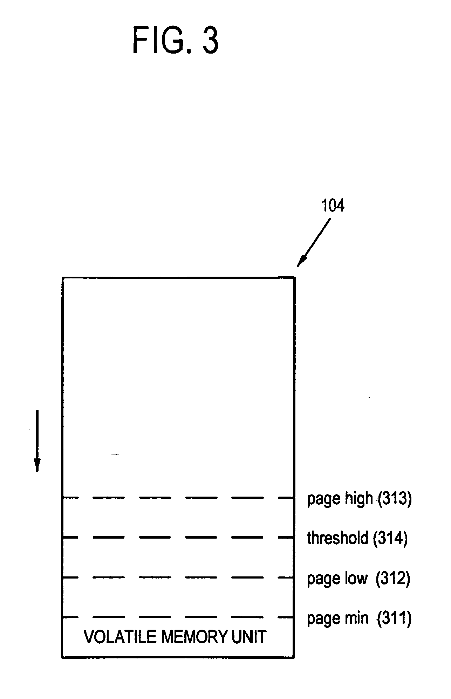

FIG. 3 is a view for explaining a memory management method according to an exemplary embodiment.

In the memory management method according to this exemplary embodiment, the electronic apparatus 100 may previously determine whether to initialize the volatile memory unit 104 with respect to the threshold value set to be larger than the minimum remaining capacity of the volatile memory unit 104, in which no more data can be stored. In FIG. 3, it is assumed that Linux is used as the OS.

As the volatile memory unit 104 continues to allocate areas by page unit, the available capacity of the volatile memory unit 104 gradually decreases. If the available capacity of the volatile memory unit 104 decreases until there is no available capacity remaining, the electronic apparatus 100 may stop operating. To prevent this, the electronic apparatus 100 in this exemplary embodiment sets up a reference value, and releases some allocated areas or initializes the volatile memory unit 104 before reaching the reference value.

Referring to Fig. 3, "page low" 312 is a reference that indicates some allocated areas should be released. If the remaining capacity of the volatile memory unit 104 reaches the "page low" 312, the electronic apparatus 100 releases the allocated pages from the "page low" 312 to the "page high" 313. Specifically, data such as the page cache, the buffer cache, the memory pool, etc. stored in the pages to be released may be deleted. If temporarily stored data is deleted for the caching, the speed of processing the program goes down but there is no effect on the program being implemented. Alternatively, the electronic apparatus 100 may have a swap function. Specifically, the electronic apparatus 100 may store data previously stored in the released pages of the volatile memory unit 104 in the non-volatile memory unit 102 according to priority of the applications, whether the pages are modified, or the like standards, so that the corresponding released pages can be allocated for a new application.

A maximum range for the pages to be released is indicated by "page high" 313. If the remaining capacity of the volatile memory unit 104 reaches to the "page low" 312 and thus some allocated areas have to be released, the electronic apparatus 100 may release the allocated pages up to the "page high" 313.

The volatile memory unit 104 is "out of memory (OOM)" when the remaining capacity reaches "page min" 311. That is, the "page min" 311 corresponds to the minimum remaining capacity of the volatile memory unit 104, in which no more data can be stored. If the remaining capacity of the volatile memory unit 104 reaches the "page min" 311, the electronic apparatus 100 cannot allocate the memory areas and removes a task being performed. In this case, the applications being implemented are terminated.

The "threshold (threshold value)" 314 is a reference to determine whether to initialize the volatile memory unit 104. According to an exemplary embodiment, the threshold value 314 may be set to be larger than the "page min" 311.

On the other hand, the volatile memory unit 104 may be intialized at the "page min" 311. However, the initialization in this case is suddenly performed under an extreme situation where there is lack of memory, so that the applications executed by a user can be stopped or terminated on their way to being implemented.

Accordingly, in the present exemplary embodiment, the threshold value 314 is set to be larger than the "page min" 311. In this case, it is possible to prevent the memory from being suddenly initialized under the extreme situation of the memory deficiency.

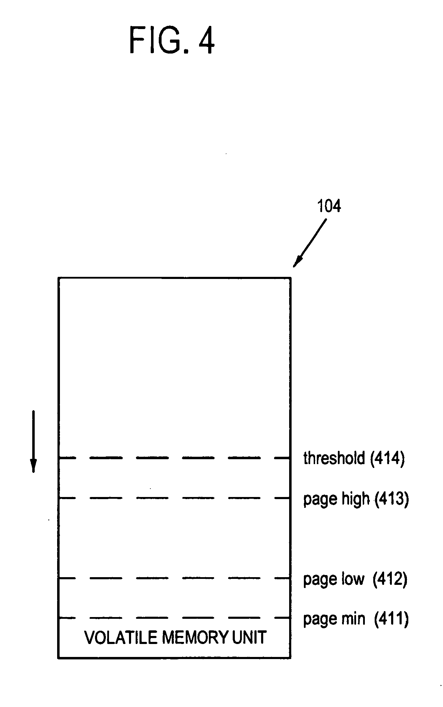

FIG. 4 is a view for explaining a memory management method according to another exemplary embodiment.

According to the memory management method in this exemplary embodiment, the threshold value 414 may be set to be larger than the "page high" 413. If the remaining capacity of the volatile memory unit 104 reaches the "threshold (threshold value)" 414, the electronic apparatus 100 determines whether to initialize the volatile memory unit 104.

When the remaining capacity of the volatile memory unit 104 reaches the "page low" 412, the electronic apparatus 100 may release the allocated pages from the "page low" 412 to the "page high" 413 to prevent the remaining capacity from reaching "page min" 411.

For example, a TV generally does not use a secondary memory such as the flash memory, the HDD, etc., but only a main memory such as the RAM or the like. If there is memory deficiency, the operation of the TV may suffer more as compared with other electronic apparatuses. Accordingly, the threshold value in this exemplary embodiment is set to be larger than the "page high" 413, so that a memory leak can be prevented at an earlier stage, thereby managing the memory in a more stable manner.

Alternatively, the threshold value may be dynamically set in response to the remaining capacity of the volatile memory unit 104 or may be set by a user.

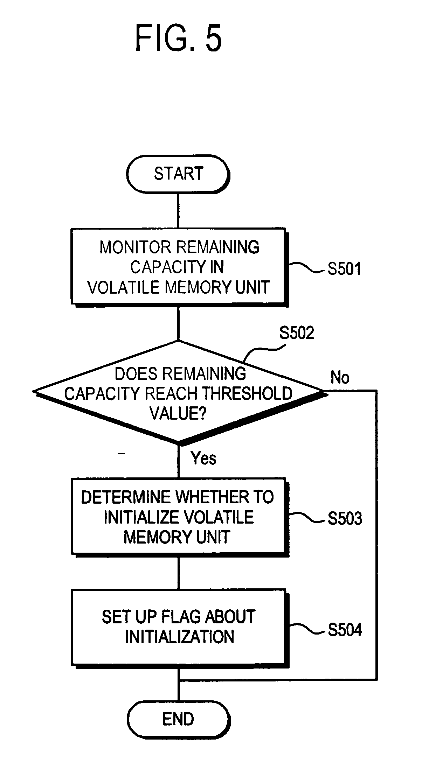

FIG. 5 is a flowchart of determining whether to initialize a volatile memory unit according to an exemplary embodiment.

At operation S501, the electronic apparatus 100 monitors the remaining capacity of the volatile memory unit 104. According to an exemplary embodiment, the electronic apparatus 100 may initialize and drive a "leak daemon" function for determining whether there is a memory leak during the booting, thereby monitoring the remaining capacity.

At operation S502, the electronic apparatus 100 determines whether the remaining capacity of the volatile memory unit 104 reaches the threshold value.

If the remaining capacity of the volatile memory unit 104 does not reach the threshold value at operation S502-N, it is not determined whether to initialize the volatile memory unit 104.

If the remaining capacity of the volatile memory unit 104 reaches the threshold value at operation S502-Y, the electronic apparatus 100 determines whether to initialize the volatile memory unit 104 at operation S503. According to an exemplary embodiment, the "leak daemon" function initialized during the booting is waken up by an interrupt, thereby determining whether there is a memory leak. Here, the interrupt may be generated when the remaining capacity of the volatile memory unit 104 reaches the threshold value.

According to an exemplary embodiment, the electronic apparatus 100 may determine whether to initialize the volatile memory unit 104 in consideration of the amount of data temporarily stored for caching. If there is no data temporarily stored for the caching, the electronic apparatus 100 may determine that the volatile memory unit 104 needs to be initialized.

At operation S504, the electronic apparatus 100 sets up a flag about the initialization. According to an exemplary embodiment, the flag may be set to "1" when the volatile memory unit 104 needs to be initialized, but "0" when the volatile memory unit 104 does not need to be initialized. Thereafter, the flag is used as an index for determining whether to initialize the volatile memory unit 104.

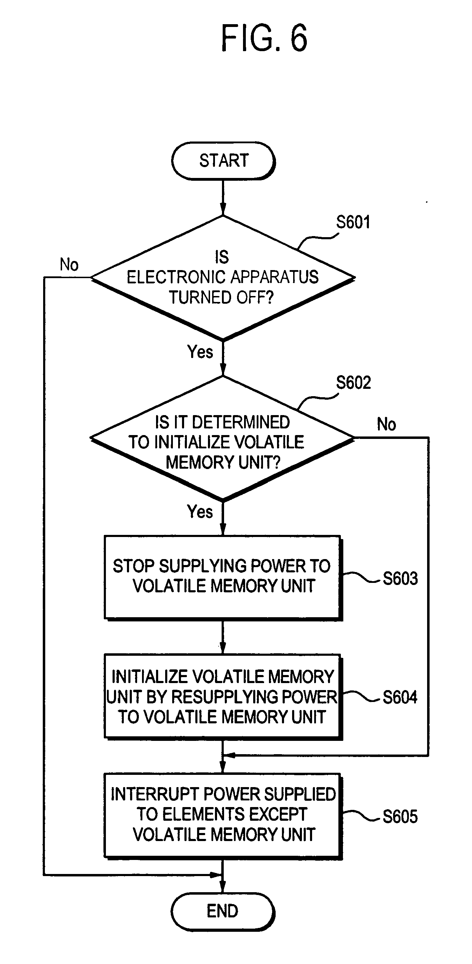

FIG. 6 is a flowchart of initializing the volatile memory unit according to an exemplary embodiment.

At operation S601, the electronic apparatus 100 determines whether it is turned off. If the electronic apparatus 100 is not turned off at operation S601-N, the electronic apparatus 100 does not initialize the volatile memory unit 104.

If the electronic apparatus 100 is turned off at operation S601-Y, the electronic apparatus 100 determines whether to initialize the volatile memory unit 104 at operation S602. According to an exemplary embodiment, the electronic apparatus 100 may read out the flag set in FIG. 5 so as to determine whether to initialize the volatile memory unit 104.

If the volatile memory unit 104 does not need to be initialized at operation S602-N, the electronic apparatus 100 shuts off power supplied to elements except the volatile memory unit 104 at operation S605. In other words, the electronic apparatus 100 continues to supply power to the volatile memory unit 104, and maintains the STR mode.

On the other hand, if the volatile memory unit 104 needs to be initialized at operation S602-Y, the electronic apparatus 100 stops supplying power to the volatile memory unit 104 at operation S603. In this case, data stored in the volatile memory unit 104 is deleted.

At operation S604, the electronic apparatus 100 initializes the volatile memory unit 104 by resupplying power to the volatile memory unit 104. Specifically, the electronic apparatus 100 may operate as if cold booting is internally performed. In this case, the electronic apparatus 100 appears to be externally turned off. For example, the panel is turned off. Thus, a user notices that the electronic apparatus 100 appears to be turned off.

Then, the electronic apparatus 100 shuts off power supplied to the elements except the volatile memory unit 104 at operation S605. In other words, the electronic apparatus 100 continues to supply power to the volatile memory unit 104, and returns to the STR mode. Thus, there is provided an environment where a user can perform warm-booting.

In this exemplary embodiment, a memory leak can be prevented, and inconvenience due to sudden initialization of the volatile memory unit 104 is minimized by initializing the volatile memory unit 104 at a time when the electronic apparatus 100 is turned off. Further, the initialized volatile memory unit 104 returns to the STR mode, thereby shortening a booting time when the electronic apparatus 100 is later turned on.

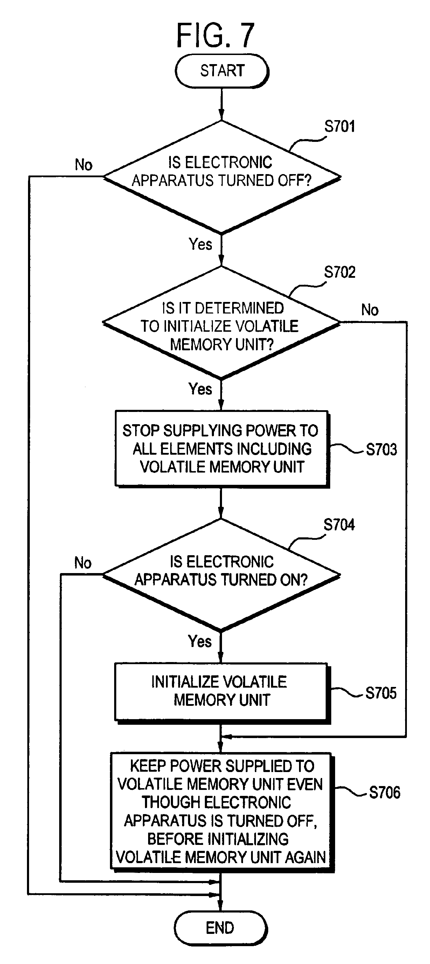

FIG. 7 is a flowchart of initializing the volatile memory unit according to another exemplary embodiment.

At operation S701, the electronic apparatus 100 determines whether it is turned off. If the electronic apparatus 100 is not turned off at operation S701-N, the electronic apparatus 100 does not initialize the volatile memory unit 104.

If the electronic apparatus 100 is turned off at operation S701-Y, the electronic apparatus 100 determines whether to initialize the volatile memory unit 104 at operation S702. According to an exemplary embodiment, the electronic apparatus 100 may read out the flag set in FIG. 5 so as to determine whether to initialize the volatile memory unit 104.

If the volatile memory unit 104 does not need to be initialized at operation S702-N, the electronic apparatus 100 goes to operation S706. At the operation S706, the electronic apparatus 100 keeps power supplied to the volatile memory unit 104 even when the volatile memory unit 104 is turned off, until the volatile memory unit 104 is initialized again. That is, the volatile memory unit 104 is maintained in the STR mode.

On the other hand, if the volatile memory unit 104 needs to be initialized at operation S702-Y, the electronic apparatus 100 stops supplying power to the volatile memory unit 104 at operation S703. In this case, data retained in the volatile memory unit 104 is deleted.

At operation S704, the electronic apparatus 100 determines whether it is turned on. If the electronic apparatus 100 is not turned on, i.e., if the electronic apparatus 100 remains turned off at operation S704-N, the electronic apparatus 100 does not initialize the volatile memory unit 104.

If the electronic apparatus is turned on at operation S704-Y, the electronic apparatus 100 initializes the volatile memory unit 104 at operation S705. At the operation S706, the electronic apparatus 100 keeps the power supplied to the volatile memory unit 104 even when turned off, until the volatile memory unit 104 is initialized again. That is, the volatile memory unit 104 is maintained in the STR mode.

As apparent from the above descriptions, a memory leak may be previously diagnosed and cold booting may be unnoticeably performed at a time when a user turns off an electronic apparatus, thereby effectively avoiding an error due to the memory leak in an STR mode.

Although a few preferred embodiments have been shown and described, it will be appreciated by those skilled in the art that various changes and modifications might be made without departing from the scope of the invention, as defined in the appended claims.

## Claims

1. An electronic apparatus (100) comprising:
a nonvolatile memory unit (102) in which an application is stored;
a volatile memory unit (104) in which data based on execution of the application is stored; and
a controller (106) which controls power supply to the volatile memory unit (104);
**characterised in that**:
the controller (106) stops supplying power to the volatile memory unit (104) when the electronic apparatus is turned off if a remaining capacity of the volatile memory unit (104) equals a threshold value for initializing the volatile memory unit (104), and keeps the power supplied to the volatile memory unit (104) to make the volatile memory unit (104) retain the data based on the execution of the application even when the electronic apparatus is turned off if the remaining capacity of the volatile memory unit (1040 does not equal the threshold value.

2. The electronic apparatus according to claim 1, wherein the controller (106) determines whether to initialize the volatile memory unit (104) if the remaining capacity of the volatile memory unit (104) equals the threshold value.

3. The electronic apparatus according to claim 2, wherein the controller (106) determines whether to initialize the volatile memory unit (104) in consideration of the amount of data temporarily stored for caching.

4. The electronic apparatus according to claim 3, wherein the controller (106) determines that the volatile memory unit (104) needs to be initialized if there is no data temporarily stored for caching.

5. The electronic apparatus according to claim 1, wherein the threshold value is set to be larger than a minimum remaining capacity of the volatile memory unit (104) where no more data can be stored.

6. The electronic apparatus according to claim 1, wherein the controller (106) initializes the volatile memory unit (104) by resupplying power to the volatile memory unit (104) being supplied with no power, or initializes the volatile memory unit (104) when the electronic apparatus (100) is turned on.

7. The electronic apparatus according to claim 6, wherein the controller (106) keeps the power supplied to the volatile memory unit (104) even when the electronic apparatus is turned off, until the initialized volatile memory unit (104) reaches the threshold value.

8. The electronic apparatus according to claim 1, wherein the data based on the execution of the application comprises work contents associated with the application that has been running in the electronic apparatus (100).

9. The electronic apparatus according to claim 1, wherein the threshold value is dynamically set in response to a remaining capacity of the volatile memory unit (104) or is set by a user.

10. A method of controlling an electronic apparatus (100), the method comprising:
loading an application stored in a nonvolatile memory unit (102) into a volatile memory unit (104);
controlling power supply to said volatile memory unit (104);
**characterised by**:
stopping supplying power to the volatile memory unit (104) when the electronic apparatus (100) is turned off if a remaining capacity of the volatile memory unit (104) equals a threshold value for initializing the volatile memory unit (104); and
keeping the power supplied to the volatile memory unit (104) to make the volatile memory unit (104) retain the data based on the execution of the application even when the electronic apparatus (100) is turned off if the remaining capacity of the volatile memory unit (104) does not equal the threshold value.

11. The method according to claim 10, further comprising determining whether to initialize the volatile memory unit (104) if the remaining capacity of the volatile memory unit (104) equals the threshold value.

12. The method according to claim 11, further comprising determining whether to initialize the volatile memory unit (104) in consideration of the amount of data temporarily stored for caching.

13. The method according to claim 12, further comprising determining that the volatile memory unit (104) needs to be initialized if there is no data temporarily stored for caching.

14. The method according to claim 10, wherein the threshold value is set to be larger than a minimum remaining capacity of the volatile memory unit (104) where no more data can be stored.

15. The method according to claim 10, further comprising initializing the volatile memory unit (104) by resupplying power to the volatile memory unit (104) being supplied with no power, or initializing the volatile memory unit (104) when the electronic apparatus is turned on.

## Patentansprüche

1. Elektronische Vorrichtung (100), umfassend:
eine nichtflüchtige Speichereinheit (102), in der eine Anwendung gespeichert wird;
eine flüchtige Speichereinheit (104), in der Daten auf der Basis der Ausführung der Anwendung gespeichert werden; und
eine Steuerung (106), die Stromversorgung für die flüchtige Speichereinheit (104) steuert;
**dadurch gekennzeichnet, dass**
die Steuerung (106) aufhört, die flüchtige Speichereinheit (104) mit Strom zu versorgen, wenn die elektronische Vorrichtung ausgeschaltet wird, falls eine verbleibende Kapazität der flüchtigen Speichereinheit (104) gleich einem Schwellenwert zum Initialisieren der flüchtigen Speichereinheit (104) ist, und hält die an die flüchtige Speichereinheit (104) gelieferte Stromversorgung, damit die flüchtige Speichereinheit (104) die Daten auf der Basis der Ausführung der Anwendung auch dann behält, wenn die elektronische Vorrichtung ausgeschaltet wird, falls die verbleibende Kapazität der flüchtigen Speichereinheit (104) nicht gleich dem Schwellenwert ist.

2. Elektronische Vorrichtung nach Anspruch 1, wobei die Steuerung (106) bestimmt, ob die flüchtige Speichereinheit (104) zu initialisieren ist, falls die verbleibende Kapazität der flüchtigen Speichereinheit (104) gleich dem Schwellenwert ist.

3. Elektronische Vorrichtung nach Anspruch 2, wobei die Steuerung (106) unter Berücksichtigung der Menge an temporär zum Caching gespeicherten Daten bestimmt, ob die flüchtige Speichereinheit (104) zu initialisieren ist.

4. Elektronische Vorrichtung nach Anspruch 3, wobei die Steuerung (106) bestimmt, dass die flüchtige Speichereinheit (104) initialisiert werden muss, falls keine temporär für Caching gespeicherten Daten vorliegen.

5. Elektronische Vorrichtung nach Anspruch 1, wobei der Schwellenwert größer als eine minimale verbleibende Kapazität der flüchtigen Speichereinheit (104), wo keine Daten mehr gespeichert werden können, gesetzt wird.

6. Elektronische Vorrichtung nach Anspruch 1, wobei die Steuerung (106) die flüchtige Speichereinheit (104) initialisiert, indem die flüchtige Speichereinheit (104), der keine Stromversorgung zugeführt wird, wieder Stromversorgung zugeführt wird, oder die flüchtige Speichereinheit (104) initialisiert, wenn die elektronische Vorrichtung (100) eingeschaltet wird.

7. Elektronische Vorrichtung nach Anspruch 6, wobei die Steuerung (106) die der flüchtigen Speichereinheit (104) zugeführte Stromversorgung auch dann hält, wenn die elektronische Vorrichtung ausgeschaltet wird, bis die initialisierte flüchtige Speichereinheit (104) den Schwellenwert erreicht.

8. Elektronische Vorrichtung nach Anspruch 1, wobei die Daten auf der Basis der Ausführung der Anwendung Arbeitsinhalte umfassen, die mit der Anwendung assoziiert sind, die in der elektronischen Vorrichtung (100) ausgeführt wurde.

9. Elektronische Vorrichtung nach Anspruch 1, wobei der Schwellenwert als Reaktion auf eine verbleibende Kapazität der flüchtigen Speichereinheit (104) dynamisch gesetzt wird oder von einem Benutzer gesetzt wird.

10. Verfahren zum Steuern einer elektronischen Vorrichtung (100), wobei das Verfahren Folgendes umfasst:
Laden einer in einer nichtflüchtigen Speichereinheit (102) gespeicherten Anwendung in eine flüchtige Speichereinheit (104);
Steuern der Stromversorgung für die flüchtige Speichereinheit (104);
**gekennzeichnet durch**:
Stoppen der Stromversorgung für die flüchtige Speichereinheit (104), wenn die elektronische Vorrichtung (100) ausgeschaltet wird, falls eine verbleibende Kapazität der flüchtigen Speichereinheit (104) gleich einem Schwellenwert zum Initialisieren der flüchtigen Speichereinheit (104) ist; und
Halten der der flüchtigen Speichereinheit (104) zugeführten Stromversorgung, damit die flüchtige Speichereinheit (104) die Daten auf der Basis der Ausführung der Anwendung auch dann behält, wenn die elektronische Vorrichtung (100) ausgeschaltet wird, falls die verbleibende Kapazität der flüchtigen Speichereinheit (104) nicht gleich dem Schwellenwert ist.

11. Verfahren nach Anspruch 10, ferner mit dem Schritt des Bestimmens, ob die flüchtige Speichereinheit (104) zu initialisieren ist, falls die verbleibende Kapazität der flüchtigen Speichereinheit (104) gleich dem Schwellenwert ist.

12. Verfahren nach Anspruch 11, ferner mit dem Schritt des Bestimmens, ob die flüchtige Speichereinheit (104) zu initialisieren ist, unter Berücksichtigung der Menge an temporär zum Caching gespeicherten Daten.

13. Verfahren nach Anspruch 12, ferner mit dem Schritt des Bestimmens, dass die flüchtige Speichereinheit (104) initialisiert werden muss, falls keine temporär zum Caching gespeicherten Daten vorliegen.

14. Verfahren nach Anspruch 10, wobei der Schwellenwert größer als eine minimale verbleibende Kapazität der flüchtigen Speichereinheit (104), wo keine Daten mehr gespeichert werden können, gesetzt wird.

15. Verfahren nach Anspruch 10, ferner mit dem Schritt des Initialisierens der flüchtigen Speichereinheit (104), indem der flüchtigen Speichereinheit (104), der keine Stromversorgung zugeführt wird, wieder Stromversorgung zugeführt wird, oder des Initialisierens der flüchtigen Speichereinheit (104), wenn die elektronische Vorrichtung eingeschaltet wird.

## Revendications

1. Appareil électronique (100) comprenant :
une unité de mémoire non volatile (102) dans laquelle est stockée une application ;
une unité de mémoire volatile (104) dans laquelle sont stockées des données basées sur l'exécution de l'application ; et
une unité de commande (106) qui commande l'alimentation en courant de l'unité de mémoire volatile (104) ;
**caractérisé en ce que** :
l'unité de commande (106) cesse d'alimenter en courant l'unité de mémoire volatile (104) lorsque l'appareil électronique est mis hors tension si la capacité restante de l'unité de mémoire volatile (104) est égale à une valeur de seuil pour initialiser l'unité de mémoire volatile (104), et maintient l'alimentation en courant de l'unité de mémoire volatile (104) pour faire en sorte que l'unité de mémoire volatile (104) conserve les données basées sur l'exécution de l'application même lorsque l'appareil électronique est mis hors tension si la capacité restante de l'unité de mémoire volatile (104) n'est pas égale à la valeur de seuil.

2. Appareil électronique selon la revendication 1, dans lequel l'unité de commande (106) détermine s'il est nécessaire d'initialiser l'unité de mémoire volatile (104) si la capacité restante de l'unité de mémoire volatile (104) est égale à la valeur de seuil.

3. Appareil électronique selon la revendication 2, dans lequel l'unité de commande (106) détermine s'il est nécessaire d'initialiser l'unité de mémoire volatile (104) en tenant compte de la quantité de données temporairement stockées en mémoire cache.

4. Appareil électronique selon la revendication 3, dans lequel l'unité de commande (106) détermine qu'il est nécessaire d'initialiser l'unité de mémoire volatile (104) si aucune donnée n'est temporairement stockée en mémoire cache.

5. Appareil électronique selon la revendication 1, dans lequel la valeur de seuil est réglée à une valeur supérieure à une capacité restante minimale de l'unité de mémoire volatile (104) lorsqu'il n'est plus possible de stocker des données.

6. Appareil électronique selon la revendication 1, dans lequel l'unité de commande (106) initialise l'unité de mémoire volatile (104) en réalimentant en courant l'unité de mémoire volatile (104) qui n'est pas alimentée en courant, ou initialise l'unité de mémoire volatile (104) lorsque l'appareil électronique (100) est mis sous tension.

7. Appareil électronique selon la revendication 6, dans lequel l'unité de commande (106) maintient l'alimentation en courant de l'unité de mémoire volatile (104) même lorsque l'appareil électronique est mis hors tension, jusqu'à ce que l'unité de mémoire volatile initialisée (104) atteigne la valeur de seuil.

8. Appareil électronique selon la revendication 1, dans lequel les données basées sur l'exécution de l'application comprennent des contenus de tâches associés à l'application qui s'est exécutée dans l'appareil électronique (100).

9. Appareil électronique selon la revendication 1, dans lequel la valeur de seuil est réglée dynamiquement en réponse à une capacité restante de l'unité de mémoire volatile (104) ou est réglée par un utilisateur.

10. Procédé de commande d'un appareil électronique (100), le procédé consistant à :
charger dans une unité de mémoire volatile (104) une application stockée dans une unité de mémoire non volatile (102) ;
commander l'alimentation en courant de ladite unité de mémoire volatile (104) ;
**caractérisé par** le fait :
d'interrompre l'alimentation en courant de l'unité de mémoire volatile (104) lorsque l'appareil électronique (100) est mis hors tension si une capacité restante de l'unité de mémoire volatile (104) est égale à une valeur de seuil pour initialiser l'unité de mémoire volatile (104) ; et
de maintenir l'alimentation en courant de l'unité de mémoire volatile (104) pour faire en sorte que l'unité de mémoire volatile (104) conserve les données basées sur l'exécution de l'application même lorsque l'appareil électronique (100) est mis hors tension si la capacité restante de l'unité de mémoire volatile (104) n'est pas égale à la valeur de seuil.

11. Procédé selon la revendication 10, consistant en outre à déterminer s'il est nécessaire d'initialiser l'unité de mémoire volatile (104) si la capacité restante de l'unité de mémoire volatile (104) est égale à la valeur de seuil.

12. Procédé selon la revendication 11, consistant à déterminer s'il est nécessaire d'initialiser l'unité de mémoire volatile (104) en tenant compte de la quantité de données temporairement stockées en mémoire cache.

13. Procédé selon la revendication 12, consistant en outre à déterminer qu'il est nécessaire d'initialiser l'unité de mémoire volatile (104) si aucune donnée n'est temporairement stockée en mémoire cache.

14. Procédé selon la revendication 10, dans lequel la valeur de seuil est réglée à une valeur supérieure à une capacité restante minimale de l'unité de mémoire volatile (104) lorsqu'il n'est plus possible de stocker de données.

15. Procédé selon la revendication 10, consistant en outre à initialiser l'unité de mémoire volatile (104) en réalimentant en courant l'unité de mémoire volatile (104) qui n'est pas alimentée en courant, ou à initialiser l'unité de mémoire volatile (104) lorsque l'appareil électronique est mis sous tension.
